# EUROPEAN PATENT APPLICATION

(11) **EP 1 923 888 A1**
(43) Date of publication of application: **21.05.2008**
(21) Application number: 08003187.5
(22) Date of filing: 14.10.2003
(51) Int. Cl.: G11B 27/034, G11B 27/036

(54) **Multimedia contents editing apparatus and multimedia contents playback apparatus**

(30) Priority: 16.10.2002 JP 2002301497
(62) Divisional of application: 03023244.1
(71) Applicant: FUJITSU LIMITED, Kawasaki-shi, Kanagawa 211-8588 (JP)
(72) Inventor: Kazui, Kimihikon, Kanagawa 211-8588 (JP); Mizutani, Masami, Kanagawa 211-8588 (JP); Morimatsu, Eishi, Kanagawa 211-8588 (JP)
(74) Representative: HOFFMANN EITLE

(57) **Abstract**

A moving picture is played and displayed according to synchronization control description data specifying a display starting time of a moving picture in a specific period, an offset time from the head of image data to the period, and a process starting time before a starting point time of the period. At this time, the image data from the process starting time to the starting point time is obtained and played, but is not displayed on the screen.

## Description

### Background of the Invention

### Field of the Invention

The present invention generally relates to the field of multimedia information processing, and more specifically to a synchronized multimedia playback process of laying out and presenting a plurality of digital media in time and space.

### Description of the Related Art

A multimedia synchronizing technology is one of the media display technology of effectively presenting users with a large volume of information. In this technology, monomedia such as a moving picture, a still image, voice, text, etc. are arranged on one or more screens and displayed synchronously in time. A practical example is a SMIL (synchronized multimedia integration language) which is standardized by W3C (worldwide web consortium).

The SMIL is a language describing the URL (uniform resource locator) of each medium, the display position on the screen, the playback starting time, the playback time length, etc. SMIL data is used to process each medium as an abstract object capable of referring to it by a URL, exists as XML data independent of its entity, and can be easily handled in editing, etc.

The most important role in the contents (SMIL contents) processed by the SMIL is moving pictures which require the largest volume of information. The SMIL can in principle be used on moving pictures in any system that is supported by a terminal which plays SMIL data. Generally, moving pictures in the MPEG-1/2/4 (Motion Picture Experts Group) of ISO/IEC (International Organization for Standardization/International Electrotechnical Commission), or Windows Media (registered trademark) of Microsoft Corporation is used. Both of them use an inter-frame coding system.

In the inter-frame coding system, a difference between the frames which are adjacent in time is obtained (prediction), and the difference is coded. This system has higher compression efficiency than the coding system in which a coding process is performed in a single frame (intra-frame coding). Instead, it has the demerit that an image cannot be regenerated only by data of a frame coded in the inter-frame coding.

This is because the data of the reference frame used in the prediction is necessary when a frame is regenerated. To regenerate a correct image of a frame, it is necessary to start playback (decoding) from the intra-frame coded frame closest to the frame, and sequentially regenerate a predicted frame.

It is necessary to periodically insert an intra-frame coded frame into coded data with the case in which data is to be played from a midpoint of the coded data taken into account. However, coding efficiency is traded off for insertion interval, and the optimum interval is selected depending on a use.

For example, in the MPEG-2 used in a digital TV (television) broadcast, an intra-frame coded frame is normally inserted every 0.5 second to output an image immediately after switching a channel. In the MPEG-4 used in the Internet streaming, etc., the intervals of the intra-frame coded frames are normally longer (several seconds or several tens of seconds) than in the MPEG-2 because the compression rate is prioritized.

Although the synchronized multimedia contents such as a SMIL are mainly used in an application for streaming distribution through the Internet, the MPEG-4 is used as moving pictures in most cases. In this case, the important point is the intervals of the intra-frame coded frames. Described below is this point.

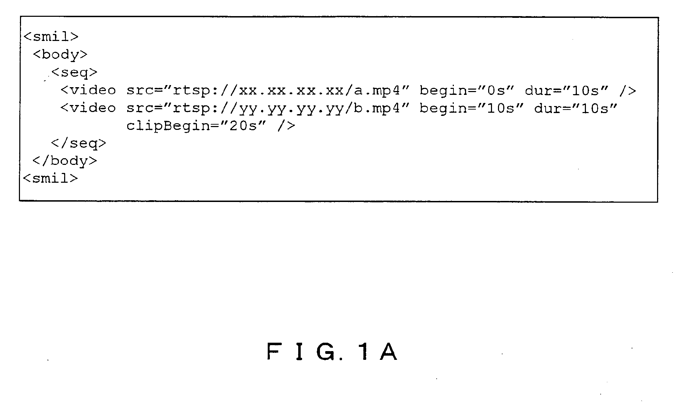

FIG. 1A shows an example of a SMIL description for multimedia contents. In this example, only moving pictures are described for simplicity. There are two moving pictures contained in the SMIL contents. One of them is "a.mp4" played for 10 seconds immediately after the playback (0 second) of contents. The "*.mp4" means the MPEG-4 file format, and rtsp (real time streaming protocol) refers to a transmission protocol for real-time streaming prescribed by IETF (the Internet Engineering Task Force).

Another moving picture is "b.mp4" played for 10 seconds after the contents are played for 10 seconds. The attribute of "clipBegin" is added to the description of this moving picture, which indicates that the playback starts from the frame at 20 seconds after the leading moving picture data.

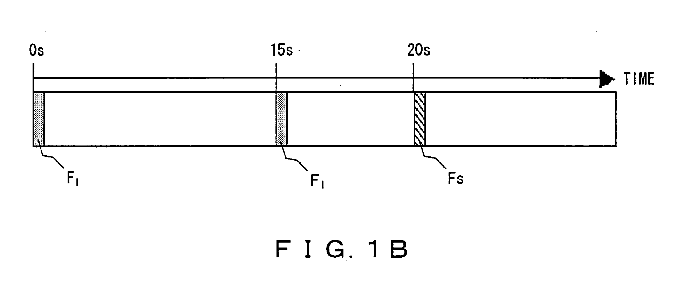

FIG. 1B shows an example of the structure of the above-mentioned moving picture "b.mp4". The frame (display start frame) Fₛ from which a display is to start based on the SMIL description is the frame at 20 seconds after the leading data, and is an inter-frame coded frame. Intra-frame coded frames F_{I} existing before 20 seconds are a frame at 0 second after the leading data (leading data itself) and a frame at 15 seconds after the leading data.

The playback apparatus of the SMIL data is supposed to function after 10 seconds of playing the SMIL data as follows.
1. According to the SMIL data, data is obtained through streaming from the frame Fₛ at 20 seconds in the moving picture "b.mp4", and the playback result is displayed as is.
2. The data is obtained through streaming from the frame at x seconds (idle time) before the 20 seconds, and a playback process (regeneration of a predicted frame) is performed while the previous moving picture "a.mp4" is played. However, the images before the 20 seconds is not desired and therefore not displayed, and the display starts from the frame Fₛ at the 20 seconds.

In the system described in 1 above, since the display start frame Fₛ is an inter-frame coded frame, an image cannot be completely regenerated, and a destroyed and incomplete image is played until a subsequent intra-frame coded frame F_{I} after the 20 seconds appears.

In the system described in 2 above, no image is destroyed when "b.mp4" is displayed, but it is necessary that an intra-frame coded frame F_{I} exists from x seconds before to the 20 second point. At this time, in the part where SMIL data is played, it is uncertain where an intra-frame coded frame is located in a moving picture. Therefore, the worst value for the intervals of the intra-frame coded frames is to be predicted, and there is the high possibility that the image data of an unnecessary portion is obtained. In the case of the MPEG-4, the worst value can be several seconds through several tens of seconds, thereby generating an unnecessary increase in a load of a streaming server, a network band, a process load and a buffering area of a playback terminal.

To perform a coding process in advance such that a frame at the starting point (time specified by clipBegin) of the playback of SMIL data is an intra-frame coded frame is impractical when the flexibility of the SMIL that the value of clipBegin can be freely changed as necessary independent of the moving picture data is considered.

There is the following conventional technologies on the above-mentioned problem.
(1) Patent Literature 1 (Japanese Patent Application Laid-open No. 2002-10215)
   To realize a trick play (playback from a midpoint, etc.) of an accumulated medium, information about all entry frames (those that can be normally played corresponding to intra-frame coded frames) in a moving picture is stored together with the moving picture data, the information is referred to when the playback process is performed, and the playback control is performed as described in 2 above.
(2) Patent Literature 2 (Japanese Patent No. 3060919)
   Like the conventional technology described in (1) above, playback control is performed according to the entry frame information (in this case, it is referred to as a start-location playback table file). The entry frame information is automatically generated by analyzing a moving picture.
   However, there is the following problem in the above-mentioned conventional technology.
   The playback control described in (1) and (2) above is effective when accumulated media are played, but cannot be applied to a system in which each medium is played through streaming using SMIL data. It can be considered that entry frame information is transmitted to a SMIL data playback terminal, but data is redundant when the information in all entry frames is transmitted, and it is necessary to prepare a different data path from SMIL data. Therefore, this is an unrealistic system.

### Brief Description of the Drawings

FIG. 1A shows the conventional SMIL description;
FIG. 1B shows the structure of a moving picture;
FIG. 2A shows the principle of the multimedia contents editing apparatus according to the present invention;
FIG. 2B shows the moving picture playback control;
FIG. 3 shows the configuration of a first multimedia system;
FIG. 4 shows moving picture meta-data;
FIG. 5 shows the SMIL description of the present invention;
FIG. 6 shows the configuration of a second multimedia system;
FIG. 7 shows the configuration of an information processing device; and
FIG. 8 shows storage media.

### Summary of the Invention

The present invention aims at providing a multimedia contents editing apparatus and a multimedia contents playback apparatus capable of playing an acceptable image from a midpoint of a moving picture without increasing a load of a network and a terminal in a system of synchronously displaying multimedia contents including an inter-frame coded moving picture distributed through streaming.

The multimedia contents editing apparatus according to the present invention includes a generation device and an editing device, and generates synchronization control description data including a time control description for display of a specific period of each moving picture at a specified time in a specified order so that multimedia contents including a plurality of inter-frame coded moving pictures can be synchronously displayed.

The generation device generates time designation information specifying a process starting time before a starting point time of the specific period, and indicating that the image data in a period from the process starting time to the starting point time is obtained and played, but is not displayed.

The editing device generates synchronization control description data including information specifying a display starting time of the specific period, information indicating an offset time from the head of the image data including the specific period to the specific period, and the time designation information.

The multimedia contents playback apparatus according to the present invention includes a synchronization control description data playback device, a media playback device, and a display device, and synchronously displays the multimedia contents including a plurality of inter-frame coded moving pictures according to the synchronization control description data including a time control description for display of a specific period of each moving picture at a specified time in a specified order.

The synchronization control description data playback device interprets synchronization control description data including information specifying a display starting time of a specific period, information about an offset time from the head of image data including the specific period to the specific period, and time designation information which specifies a process starting time before a starting point time of the specific period, and indicates that the image data in a period from the process starting time to the starting point time is obtained and played, but is not displayed, and generates playback information.

The media playback device obtains image data from the process starting time to the endpoint time of the specific period according to the playback information, and plays a moving picture.

The display device displays the moving picture of the specific period in the played moving picture on the screen.

### Description of the Preferred Embodiments

The embodiments of the present invention are described below in detail by referring to the attached drawings.

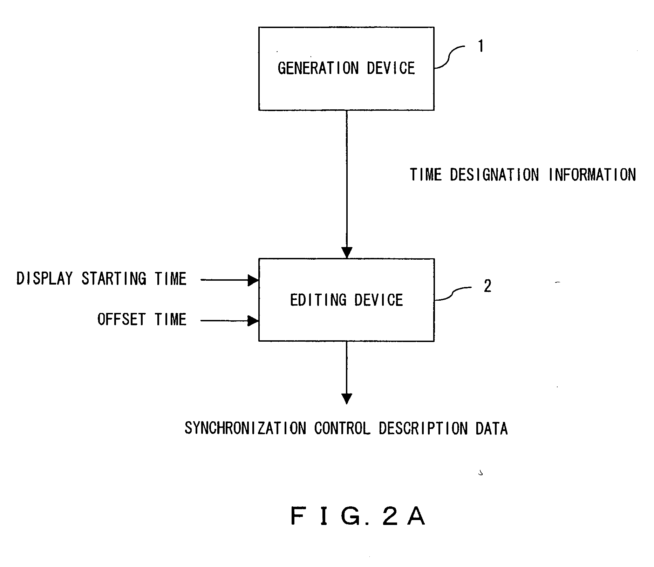

FIG. 2A shows the principle of the multimedia contents editing apparatus according to the present invention. The multimedia contents editing apparatus shown in FIG. 2A comprises a generation device 1 and an editing device 2, and generates synchronization control description data including a time control description for display of a specific period of each moving picture at a specified time in a specified order to synchronously display multimedia contents including a plurality of inter-frame coded moving pictures.

The generation device 1 generates time designation information which specifies a process starting time before the starting point time of the specific period, and indicates that the image data of a period from the process starting time to the starting point time is obtained and played, but is not displayed.

The editing device 2 generates synchronization control description data including information specifying a display starting time of the specific period, information indicating an offset time from the head of the image data including the specific period to the specific period, and the time designation information.

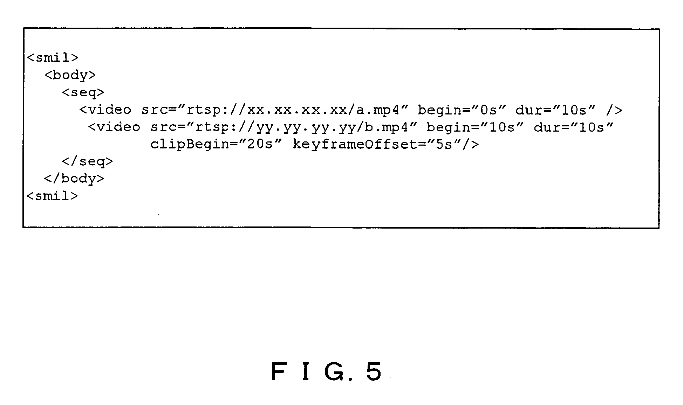

The synchronization control description data corresponds to, for example, the SMIL description shown in FIG. 5 which is described later, and the specific period corresponds to, for example, the display period (period from the point after 20 seconds to the point after 30 seconds) specified by clipBegin and dur attributes of the moving picture "b.mp4" shown in FIG. 5. The display starting time corresponds to, for example, the time (the point after 10 seconds) specified by a begin attribute. The offset time corresponds to, for example, a time (20 seconds) specified by the clipBegin attribute.

The process starting time corresponds to the position of a necessary frame for playback of a moving picture without degradation. For example, the time corresponding to the intra-frame coded frame before and closest to the display start frame corresponding to the starting point time of the specific period is used as the process starting time. The time designation information specifying the process starting time corresponds to, for example, the keyframeOffset attribute shown in FIG. 5. In this case, a result obtained by subtracting the time (5 seconds) specified by the keyframeOffset attribute from the offset time indicates the process starting time.

By adding the above-mentioned time designation information to the synchronization control description data, the multimedia contents playback apparatus can obtain and play only the image data in and after the frame corresponding to the process starting time without obtaining the image data before the process starting time. Using the frames at and after the process starting time, a moving picture without degradation can be played with the minimal image data. Therefore, the load of a network and a terminal is not uselessly increased.

Furthermore, the multimedia contents playback apparatus can recognize the starting point time of the specific period from the offset time included in the synchronization control description data. Thus, the playback control can be performed such that the image data of the period from the process starting time to the starting point time can be obtained and played, but not be displayed, and only the image data in the specific period can be displayed by the playback control.

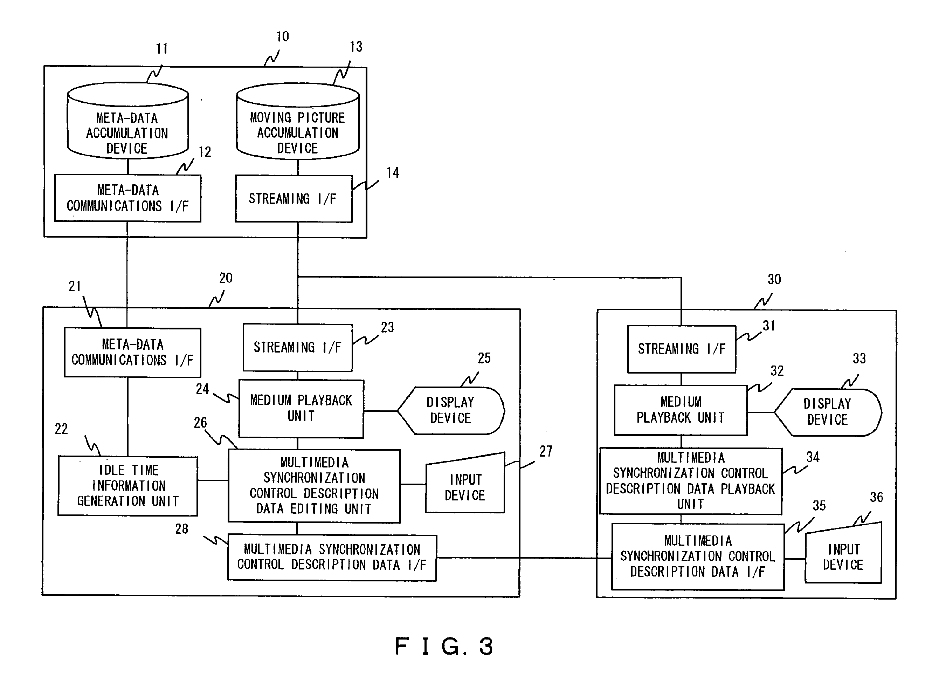

The generation device 1 and the editing device 2 shown in FIG. 2A respectively correspond to an idle time information generation unit 22 and a multimedia synchronization control description data editing unit 26 shown in FIG. 3.

In the present embodiment, the offset time from the head of the moving picture data to the display start frame, and the time (idle time) from the display start frame to the intra-frame coded frame before and closest to it are described in the multimedia synchronization control description data such as SMIL data. The idle time information is generated by the multimedia contents editing apparatus, which generates the multimedia synchronization control description data, by referring to the meta-data of moving pictures.

First described are the outlines of the meta-data of moving pictures, the multimedia contents editing apparatus, and the multimedia contents playback apparatus.

Moving picture meta-data describes the contents, format, etc. of moving pictures, and mainly used in moving picture retrieval, etc. In the meta-data, the position information about an intra-frame coded frame is described. A describing method can be, for example, the following two methods.
1. When the intervals of intra-frame coded frames are uniform intervals, the relative time (normally 0 second) of the leading intra-frame coded frame of the moving picture data and the intervals (x seconds) are described.
2. When the intervals of intra-frame coded frames are nonuniform intervals, a list of relative times of intra-frame coded frames is described.

The moving picture meta-data is accumulated in the moving picture streaming server with moving picture data, or stored in the multimedia contents editing apparatus. In the former case, the data is accumulated in such a format that the multimedia contents editing apparatus can refer to the data according to the moving picture reference information (for example, URL).

The multimedia contents editing apparatus has a GUI (graphical user interface) basically based on the conventional multimedia contents editing apparatus. A user generates synchronization control description data in a nonlinear editing method through the GUI. In the user editing operation, the display starting time of each moving picture and an offset time from the head of the moving picture data to the display start frame are generated.

Then, according to the offset time and the position information of the intra-frame coded frame in the moving picture meta-data, the multimedia contents editing apparatus computes the idle time information of each moving picture described by the multimedia synchronization control description data. Practically, the following process is performed with the offset time assumed to be T1.
1. The position information of an intra-frame coded frame is searched for from the head of data, and the maximum T satisfying T < T1 is obtained with T indicating the time from the head to each intra-frame coded frame.
2. The idle time ΔT is computed according to the equation ΔT = T1 - T.

The obtained ΔT is added to the multimedia synchronization control description data as idle time information. The final multimedia synchronization control description data is transmitted to the multimedia contents playback apparatus (terminal).

The multimedia contents playback apparatus which receives the multimedia synchronization control description data obtains each medium according to the description, and performs synchronous playback. At this time, the moving picture data is processed as follows.
1. Using Tx as the offset time of the x-th moving picture data in the multimedia synchronization control description data, and ΔTx as the idle time of the moving picture data, a streaming distribution from the frame corresponding to the time of (Tx - ΔTx) is requested to the streaming server (y seconds) before the specified display starting time.
2. A received moving picture is played. At this time, the frame before Tx is played (decoded), but is not displayed.
3. When the frame corresponding to Tx is played, and the current time (multimedia synchronization control description data playback time) reaches a specified display starting time, the remaining frames are played and displayed on the screen.

The value of "y seconds" is determined depending on the (Tx - ΔTx), the bit rate of the moving picture, the transmission band, the process speed of a playback terminal, etc., but a practical computing method is not limited.

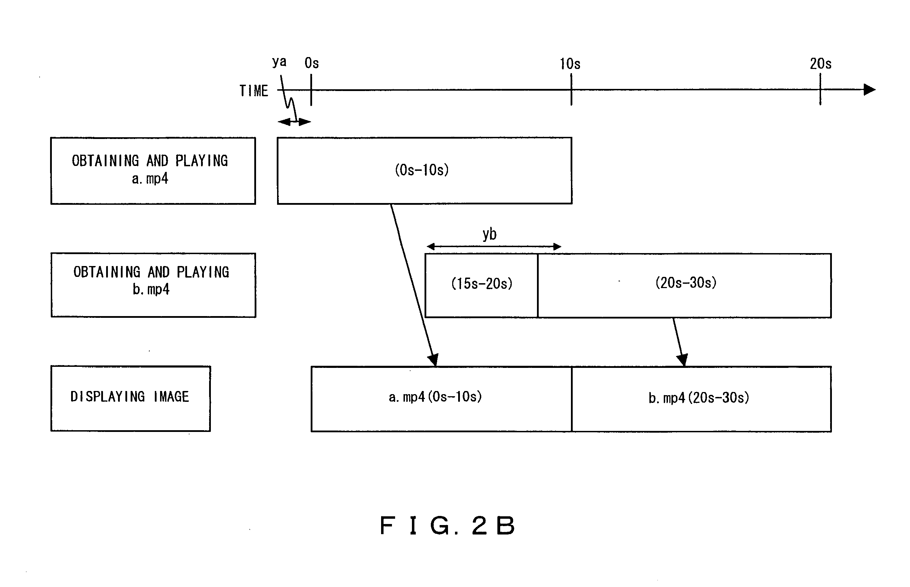

FIG. 2B shows the control when two moving pictures shown in FIG. 1A are played. In this example, the multimedia contents playback apparatus requests the streaming server to perform a streaming distribution of "a.mp4" ya seconds before 0 second which is the display starting time of the moving picture "a.mp4".

In this case, since the offset time and the idle time are not set, Tx = ΔTx = 0 is assumed, and the moving picture data from the "a.mp4" to 10 seconds are obtained and played, and displayed on the screen. The time of ya corresponds to the delay (server connection delay, transmission delay, etc.) from the obtainment of the moving picture data to the display of the first frame.

The offset time of 20 seconds and the idle time of 5 seconds (= 20 seconds - 15 seconds) are set for the moving picture "b.mp4". The multimedia contents playback apparatus requests the streaming server to perform a streaming distribution from the frame corresponding to the time of 15 seconds (= 20 seconds - 5 seconds) yb seconds before the 10 seconds of the display starting time of the moving picture "b.mp4".

In this case, the obtainment starts from the frame at 15 seconds after the head of the "b.mp4", and the obtainment terminates at the frame at 20 seconds after the head. Among these, the moving picture data from 15 seconds to 20 seconds is played, but is not displayed on the screen. The moving picture data from 20 seconds to 30 seconds is played and displayed on the screen. The time of yb is set longer than the idle time of 5 seconds.

According to the above-mentioned multimedia contents editing apparatus and multimedia contents playback apparatus, multimedia synchronization control description data including idle time information is automatically generated and the minimal moving picture data required in generating inter-frame coded moving pictures in a streaming format can be distributed according to the description data. Therefore, when the above-mentioned moving pictures are synchronously played from a midpoint point, the load of a network and a terminal is not uselessly increased, and the degradation of moving pictures by the length of intervals of intra-frame coded frames can be suppressed.

FIG. 3 shows the configuration of the multimedia system for performing the above-mentioned playback control. In this example, the available medium is limited to moving pictures, but media such as still images, text, etc. can be processed as in the known system. The multimedia system shown in FIG. 3 comprises a moving picture streaming server 10, a multimedia contents editing apparatus 20, and a multimedia contents playback terminal 30. These components communicate with each other through a network.

The moving picture streaming server 10 comprises a meta-data accumulation device 11, a meta-data communications I/F (interface) 12, a moving picture accumulation device 13, and a streaming I/F 14.

The meta-data accumulation device 11 accumulates moving picture meta-data, and outputs corresponding moving picture meta-data according to the moving picture reference information (moving picture identifier of a URL, etc.) transferred from the meta-data communications I/F 12.

The meta-data communications I/F 12 communicates with external equipment through a network, extracts a moving picture identifier from a moving picture meta-data request input through the network, and transfers the moving picture identifier to the meta-data accumulation device 11. Then, it transmits the moving picture meta-data output from the meta-data accumulation device 11 to the network. The network communications protocol can be, for example, an HTTP (hyper text transfer protocol).

The moving picture accumulation device 13 accumulates moving pictures, and outputs a corresponding moving picture based on the moving picture identifier transferred from the streaming I/F 14. The streaming I/F 14 communicates with external equipment through a network, extracts a moving picture identifier from a moving picture request input through the network, and transfers it to the moving picture accumulation device 13. Then, it transmits a moving picture output from the moving picture accumulation device 13 to the network. The network communications protocol can be, for example, an RTSP (real time streaming protocol).

The multimedia contents editing apparatus 20 comprises a meta-data communications I/F 21, an idle time information generation unit 22, a streaming I/F 23, a medium playback unit 24, a display device 25, a multimedia synchronization control description data editing unit 26, an input device 27, and a multimedia synchronization control description data I/F 28. The multimedia contents editing apparatus 20 performs an editing process performed by a known multimedia contents editing apparatus (for example, a computer loaded with SMIL editor software) when idle time information is not used.

The meta-data communications I/F 21 communicates with external equipment through a network, generates a moving picture meta-data request message based on a moving picture identifier transferred from the idle time information generation unit 22, and transmits the message to the network. Then, it transmits the obtained moving picture meta-data to the idle time information generation unit 22.

The idle time information generation unit 22 generates idle time information. First, it obtains multimedia synchronization control description data not containing idle time information from the multimedia synchronization control description data editing device 26. Then, it extracts a moving picture identifier from the multimedia synchronization control description data, and transfers it to the meta-data communications I/F 21.

Furthermore, it analyzes moving picture meta-data transferred from the meta-data communications I/F 21. Using the offset time described in the multimedia synchronization control description data and the position information (time information) of the intra-frame coded frame described in the moving picture meta-data, idle time information is computed in the above-mentioned method. Then, based on the computation result, the multimedia synchronization control description data is corrected, and is transferred to the multimedia synchronization control description data editing device 26.

The streaming I/F 23 communicates with external equipment through a network, generates a moving picture request message based on a moving picture identifier transferred from the medium playback unit 24, and transmits the message to the network. The obtained moving picture is transferred to the medium playback unit 24.

The medium playback unit 24 plays a moving picture medium. First, it receives information (a moving picture identifier, control information (input of an operation such as playback, a temporary stop, etc.) for playback of the moving picture medium transmitted from the multimedia synchronization control description data editing device 26, and notifies the streaming I/F 23 of the moving picture identifier. Then, it plays the moving picture received from the streaming I/F 23, and displays it on the screen of the display device 25 according to the control information for playback of the moving picture medium. The display device 25 corresponds to, for example, a display of a computer, and displays a played moving picture.

The multimedia synchronization control description data editing unit 26 generates multimedia synchronization control description data, and previews each moving picture to a user who edits multimedia contents using the medium playback unit 24, the streaming I/F 23, and the display device 25. The user inputs a playback timing (display starting time, display time length, etc.) of a desired moving picture, and generates multimedia synchronization control description data. The input device 27 corresponds to, for example, a keyboard and a mouse of a computer.

Then, the multimedia synchronization control description data editing unit 26 transfers the generated multimedia synchronization control description data to the idle time information generation unit 22. Then, it transfers to the multimedia synchronization control description data I/F 28 the multimedia synchronization control description data which is transferred from the idle time information generation unit 22, and to which idle time information is added.

The multimedia synchronization control description data I/F 28 communicates with external equipment through a network, and transmits multimedia synchronization control description data transferred from the multimedia synchronization control description data editing unit 26 to the network at a request from the external equipment. The network communications protocol can be, for example, an HTTP.

The multimedia contents playback terminal 30 comprises a streaming I/F 31, a medium playback unit 32, a display device 33, a multimedia synchronization control description data playback unit 34, a multimedia synchronization control description data I/F 35, and an input device 36.

The streaming I/F 31 communicates with external equipment through a network, generates a moving picture request message according to the moving picture identifier transferred from the medium playback unit 32 and a process starting time (offset time - idle time) of a moving picture, and transmits the message to the network. Then, it transmits the obtained moving picture to the medium playback unit 32.

The medium playback unit 32 plays a moving picture medium. First, it receives information (a moving picture identifier, a display starting time, an offset time, an idle time, a display stop time, an on-screen layout, etc.) which is transmitted from the multimedia synchronization control description data playback unit 34 and used in playing each moving picture medium.

Then, it notifies the streaming I/F 31 of a moving picture identifier and a process starting time of a moving picture at an appropriate timing based on the time control of the built-in function of the medium playback unit 32. The process starting time is specified by a result obtained by subtracting the idle time from the offset time, and indicates the starting position of the playback process (decoding process) in the moving picture data.

The medium playback unit 32 plays the moving picture received from the streaming I/F 31, and displays the screen of the display device 33 according to the information for playback of a moving picture medium. When the played moving picture corresponds to a frame before the display start frame, it is not transferred to the display device 33. When the played moving picture corresponds to a display start frame, and the current time reaches the display starting time, the moving picture is transferred to the display device 33. The display device 33 corresponds to, for example, a display of a computer, and displays synchronously played multimedia contents.

The multimedia synchronization control description data playback unit 34 interprets the multimedia synchronization control description data transferred from the multimedia synchronization control description data I/F 35, generates the information for playback of each moving picture medium, and transfers the information to the medium playback unit 32.

The multimedia synchronization control description data I/F 35 communicates with external equipment through a network, generates a synchronization control description data request message based on a multimedia synchronization control description data identifier input from the input device 36, and transmits the message to the network. Then, it transfers the received multimedia synchronization control description data to the multimedia synchronization control description data playback unit 34. The input device 36 corresponds to, for example, a keyboard or a mouse of a computer.

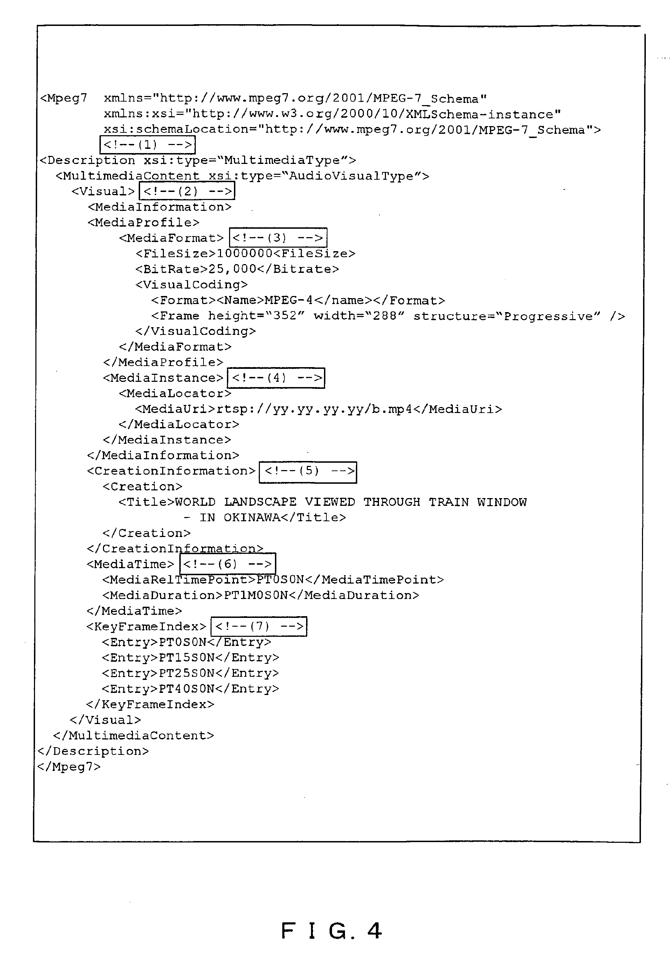

The system of the above-mentioned moving picture meta-data can be, for example, a MPEG-7. The description format of the MPEG-7 is an XML. FIG. 4 shows an example of moving picture meta-data based on the MPEG-7.

The meta-data is generated automatically or manually using a coding parameter, etc. of the coding device when moving picture data is generated, etc. However, since the position of the intra-frame coded frame in the moving picture cannot be described according to the current MPEG-7 standard, it is necessary to use a uniquely extended tag. Listed below are the meanings of the important tags assigned numbers as shown in FIG. 4.
(1) The highest order tag of an MPEG-7 meta-data
(2) The highest order tag when one piece of moving picture data is described. In this example, the meta-data of the moving picture "b.mp4" shown in FIG. 9 is described.
(3) The coding format of moving picture data, and the description of a coding parameter.
(4) The description (moving picture identifier) of the location of a moving picture data entity.
(5) The description about the generation of moving picture data (title, etc.).
(6) The time information about moving picture data. In this example, it is indicated that the time length is 1 minute, 0 second and 0 frame.
(7) The time information about an intra-frame coded frame. Does not exist in the MPEG-7 standard. In this example, the intra-frame coded frame is located at the position of 0 second and 0 frame, 15 seconds and 0 frame, 25 seconds and 0 frame, and 40 seconds and 0 frame.

FIG. 5 shows an example of multimedia synchronization control description data generated by the multimedia contents editing apparatus based on the moving picture meta-data shown in FIG. 4. In this example, the SMIL description is used as multimedia synchronization control description data.

The control information about "b.mp4" is described in the second <video> tag shown in FIG. 5, and includes the attributes of src, begin, dur, clipBegin, and keyframeOffset. Among them, the src attribute corresponds to the moving picture identifier, the begin attribute corresponds to the information specifying the display starting time, the dur attribute corresponds to the display time length, the clipBegin attribute corresponds to the offset time, and the keyframeOffset attribute corresponds to the idle time information. The begin, dur, clipBegin, and keyframeOffset attributes correspond to the time control description.

In the time control description, the display start frame of "b.mp4" is located 20 seconds after the head. The intra-frame coded frame before and closest to it is located 5 seconds before (15 seconds after the head). Therefore, using the multimedia synchronization control description data shown in FIG. 5, the playback control is realized as shown in FIG. 2B.

In the multimedia synchronization control description data shown in FIG. 5, clipBegin and keyframeOffset attributes are added only to the moving picture "b.mp4". However, when these attributed are set for the moving picture "a.mp4", a playback control similar to that of "b.mp4" is performed. Furthermore, when three or more pieces of moving pictures are synchronously displayed, each moving picture can be displayed from a midpoint using a time control description similar to that of "b.mp4" on each moving picture.

In the multimedia system shown in FIG. 3, the moving picture streaming server is separate from the multimedia contents editing apparatus. However, it is possible to add the function of the moving picture streaming server to the multimedia contents editing apparatus.

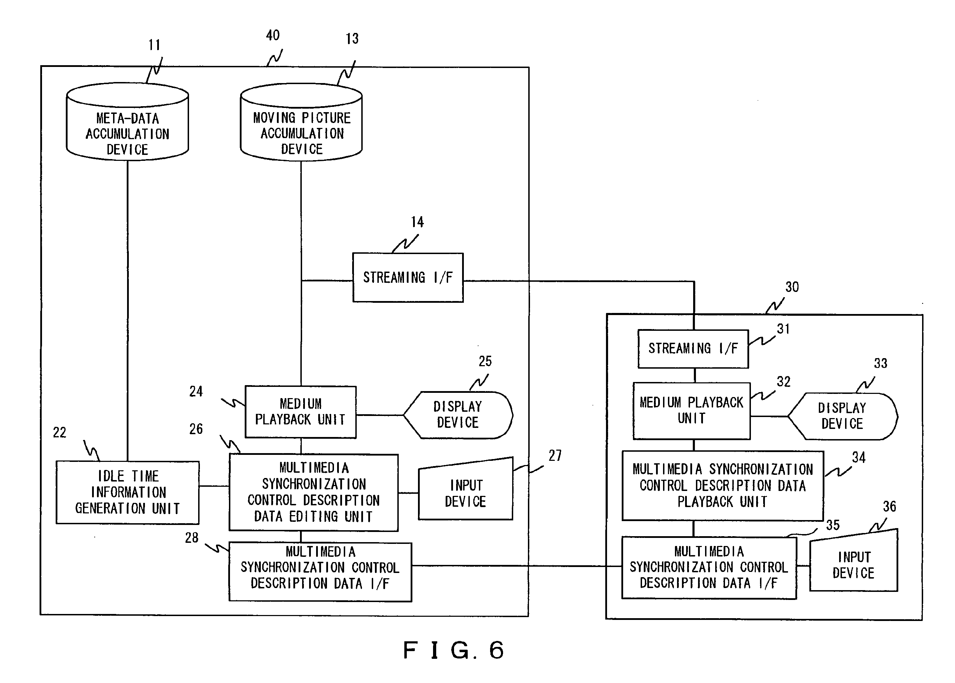

FIG. 6 shows the configuration of the above-mentioned multimedia system. A multimedia contents editing apparatus 40 shown in FIG. 6 comprises the components of the moving picture streaming server 10 and the multimedia contents editing apparatus 20 shown in FIG. 3. However, since the meta-data accumulation device 11 and the moving picture accumulation device 13 are directly connected to the idle time information generation unit 22 and the multimedia synchronization control description data editing unit 26 respectively, the meta-data communications I/F 12 and 21, and the streaming I/F 23 shown in FIG. 3 are not required. The multimedia contents playback terminal 30 is same as that shown in FIG. 3.

According to such a multimedia contents editing apparatus, the communications cost required in reading moving picture meta-data and a moving picture from the meta-data accumulation device 11 and the moving picture accumulation device 13 can be reduced.

In the above-mentioned embodiments, idle time information is added to the multimedia synchronization control description data to specify the process starting time of a moving picture. The process starting time can also be specified according to other information. For example, the time from the head of a moving picture to a necessary intra-frame coded frame (the intra-frame coded frame before and closest to the display start frame) can be added to the multimedia synchronization control description data as the time designation information specifying the process starting time.

In this case, the time designation information is transferred from the multimedia synchronization control description data playback unit 34 shown in FIG. 3 to the streaming I/F 31 through the medium playback unit 32, and the streaming I/F 31 generates a moving picture request message from the information and the moving picture identifier. Thus, the moving picture data at and after the process starting time can be obtained.

It is not always necessary that the process starting time corresponds to the position of the intra-frame coded frame, but it only has to correspond to the position of a necessary frame for playback without degrading a moving picture.

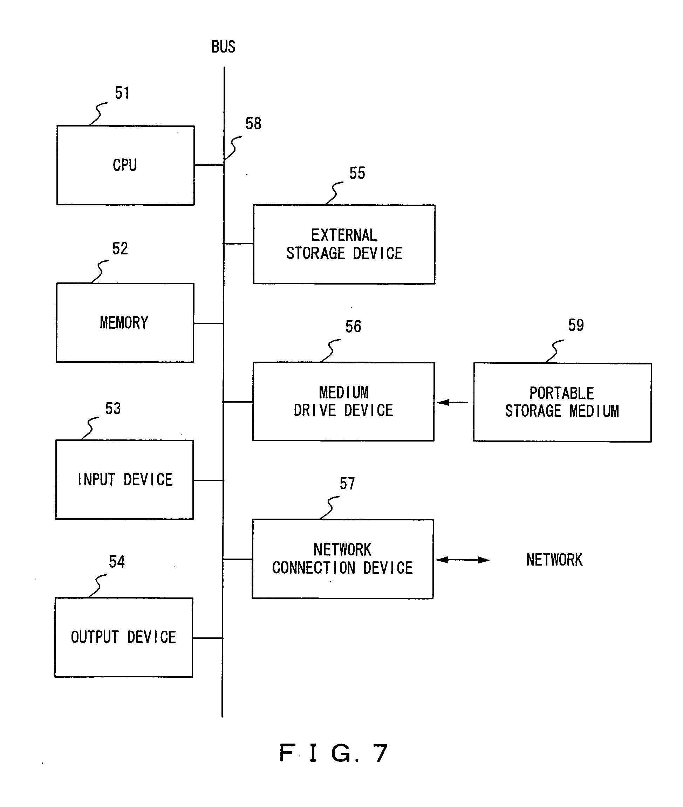

Each function of the multimedia system shown in FIGS. 3 and 6 can be implemented by hardware or software. When each function is implemented by software, the moving picture streaming server 10, the multimedia contents editing apparatus 20, and the multimedia contents playback terminal 30 shown in FIG. 3, and the multimedia contents editing apparatus 40 shown in FIG. 6 are configured using the information processing device (computer) as shown in FIG. 7.

The information processing device shown in FIG. 7 comprises a CPU (central processing device) 51, memory 52, an input device 53, an output device 54, an external storage device 55, a medium drive device 56, and a network connection device 57, and they are connected to one another through a bus 58.

The memory 52 includes, for example, ROM (read only memory), RAM (random access memory), etc., and stores a program and data for use in processing. The CPU 51 performs necessary processes by executing the program using the memory 52.

For example, the above-mentioned moving picture meta-data and the multimedia synchronization control description data are processed after being stored in the memory 52. The idle time information generation unit 22, the medium playback unit 24, the multimedia synchronization control description data editing unit 26, the medium playback unit 32, and the multimedia synchronization control description data playback unit 34 shown in FIG. 3 correspond to a program stored in the memory 52. However, the functions of a part of the medium playback unit 24 and 32 are supported by hardware.

The input device 53 can be, for example, a keyboard, a pointing device, a touch panel, etc., and correspond to the input devices 27 and 36 shown in FIG. 3. The input device 53 is used in inputting an instruction and information from a user.

The output device 54 includes, for example, a display device and a speaker, and corresponds to the display devices 25 and 33 shown in FIG. 3. The output device 54 is used in outputting multimedia contents, an inquiry to the user, and other process results.

The external storage device 55 can be, for example, a magnetic disk device, an optical disk device, a magneto-optic disk device, a tape device, etc. The information processing device stores the above-mentioned program and data in the external storage device 55, and uses them after loading them into the memory 52 as necessary. The external storage device 55 is also used as the meta-data accumulation device 11 and the moving picture accumulation device 13 shown in FIG. 3.

The medium drive device 56 drives a portable storage medium 59, and accesses the stored contents. The portable storage medium 59 can be any computer-readable storage medium such as a memory card, a flexible disk, CD-ROM (compact disk read only memory), an optical disk, a magneto-optic disk, etc. The user stores the above-mentioned program and data on the portable storage medium 59, and uses them after loading them into the memory 52 as necessary.

The network connection device 57 is connected to any communications network such as Internet, etc., and converts data during the communications. The information processing device receives the above-mentioned program and data from other devices through the network connection device 57, and uses them after loading them into the memory 52 as necessary.

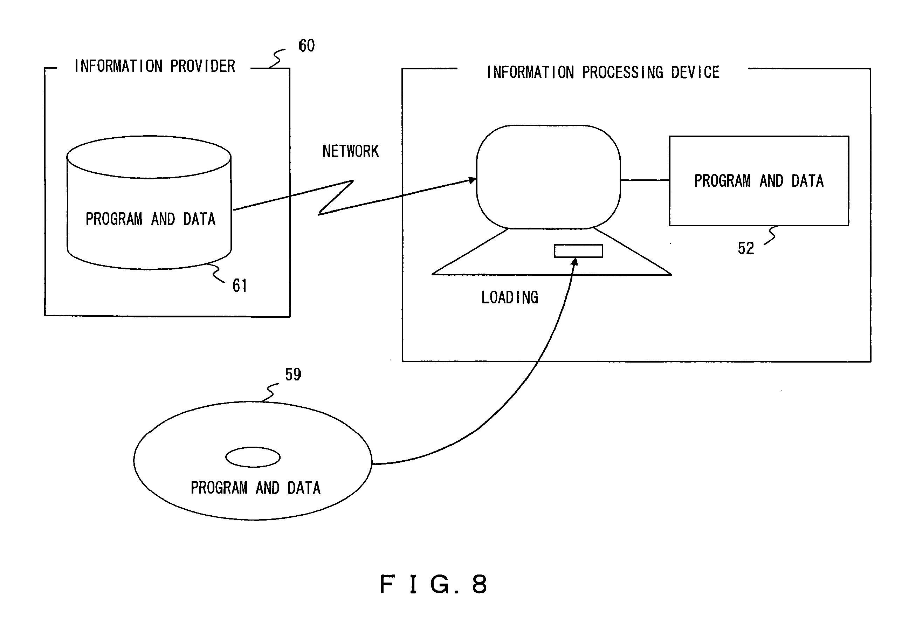

FIG. 8 shows computer-readable storage media capable of providing a program and data for the information processing device shown in FIG. 7. The program and data stored in the portable storage medium 59 or the database 61 in a server 60 are loaded into the memory 52. At this time, the server 60 generates a propagation signal for propagating the program and data, and transmits the generated signal to the information processing device through arbitrary transmission medium in the network. Then, the CPU 51 executes the program using the data, and performs a necessary process.

According to the present invention, when inter-frame coded moving picture data in a streaming format is synchronously played, moving picture data required in suppressing the degradation of images can be distributed without uselessly increasing the load of a network and a terminal. Especially, the degradation of images at the joint of a plurality of moving pictures caused by the interval length of intra-frame coded frames can be suppressed by distributing the minimal moving picture data.

The description also includes the following numbered clauses:
1. A computer-readable storage medium (52, 55, 59 and 61) storing a program for a computer (20 and 40) to generate synchronization control description data including a time control description for display of a specific period of each moving picture at a specified time in a specified order so that multimedia contents including a plurality of inter-frame coded moving pictures can be synchronously displayed, the program directing the computer to perform:
   generating (1 and 22) time designation information specifying a process starting time before a starting point time of the specific period, and indicating that image data in a period from the process starting time to the starting point time is obtained and played, but is not displayed; and
   generating (2 and 26) synchronization control description data including information specifying a display starting time of the specific period, information indicating an offset time from a head of image data including the specific period to the specific period, and the time designation information.
2. The storage medium according to clause 1, wherein
   said computer generates time designation information specifying a time corresponding to an intra-frame coded frame before and closest to a display start frame corresponding to the starting point time.
3. A computer-readable storage medium (52, 55, 59 and 61) storing a program for a computer (30) to synchronously display the multimedia contents including a plurality of inter-frame coded moving pictures according to synchronization control description data including a time control description for display of a specific period of each moving picture at a specified time in a specified order, the program directing the computer to perform:
   interpreting (34) synchronization control description data including information specifying a display starting time of the specific period, information indicating an offset time from a head of image data including the specific period to the specific period, and time designation information which specifies a process starting time before a starting point time of the specific period, and indicates that the image data in a period from the process starting time to the starting point time is obtained and played, but is not displayed, and generating playback information;
   obtaining (32) image data from the process starting time to an endpoint time of the specific period according to the playback information, and playing a moving picture; and
   displaying (33) on a screen a moving picture in the specific period of the played moving picture.
4. The storage medium according to clause 3, wherein
   said time designation information specifies a time corresponding to an intra-frame coded frame before and closest to a display start frame corresponding to the starting point time as the process starting time.
5. A computer-readable storage medium (52, 55, 59 and 61) storing a program for a computer (20 and 40) to generate synchronization control description data including a time control description for display of a specific period of each moving picture at a specified time in a specified order so that multimedia contents including a plurality of inter-frame coded moving pictures can be synchronously displayed, the program directing the computer to perform:
   generating (1 and 22) idle time information specifying an interval between a starting point time of the specific period and a process starting time before the specific period, and indicating that image data in a period from the process starting time to the starting point time is obtained and played, but is not displayed; and
   generating (2 and 26) synchronization control description data including information specifying a display starting time of the specific period, information indicating an offset time from a head of image data including the specific period to the specific period, and the idle time information.
6. The storage medium according to clause 5, wherein said computer generates the idle time information using a time corresponding to an intra-frame coded frame before and closest to a display start frame corresponding to the starting point time.
7. The storage medium according to clause 6, wherein said computer refers to the offset time determined when multimedia contents are edited, and time information of an intra-frame coded frame included in each moving picture, and subtracts a time of the intra-frame coded frame before and closest to the display start frame from the offset time, thereby generating the idle time information.
8. A computer-readable storage medium (52, 55, 59 and 61) storing a program for a computer (30) to synchronously display the multimedia contents including a plurality of inter-frame coded moving pictures according to synchronization control description data including a time control description for display of a specific period of each moving picture at a specified time in a specified order, the program directing the computer to perform:
   interpreting (34) synchronization control description data including information specifying a display starting time of the specific period, information indicating an offset time from a head of image data including the specific period to the specific period, and idle time information which indicates an interval between a starting point time of the specific period and a process starting time before the specific period, and indicates that the image data in a period from the process starting time to the starting point time is obtained and played, but is not displayed, and generating playback information;
   obtaining (32) image data from the process starting time to an endpoint time of the specific period according to the playback information, and playing a moving picture; and
   displaying (33) on a screen a moving picture in the specific period of the played moving picture.
9. The storage medium according to clause 8, wherein said idle time information is generated using a time corresponding to an intra-frame coded frame before and closest to a display start frame corresponding to the starting point time as the process starting time.
10. The storage medium according to clause 9, wherein
   said computer notifies a moving picture streaming server (10) which holds the plurality of inter-frame coded moving pictures and distributes through streaming an inter-frame coded moving picture at a request, of a result of subtracting a time indicated by the idle time information from the offset time and moving picture reference information before the display starting time, thereby obtaining image data in and after the intra-frame coded frame before and closest to the display start frame, plays a moving picture from the obtained image data, does not display the played moving picture when the played moving picture corresponds to a frame before the display start frame, but displays the played moving picture when the played moving picture corresponds to the display start frame and a current time reaches the display starting time.
11. A propagation signal for propagating a program to a computer (20 and 40) to generate synchronization control description data including a time control description for display of a specific period of each moving picture at a specified time in a specified order so that multimedia contents including a plurality of inter-frame coded moving pictures can be synchronously displayed, the program directing the computer to perform:
   generating (1 and 22) time designation information specifying a process starting time before a starting point time of the specific period, and indicating that image data in a period from the process starting time to the starting point time is obtained and played, but is not displayed; and
   generating (2 and 26) synchronization control description data including information specifying a display starting time of the specific period, information indicating an offset time from a head of image data including the specific period to the specific period, and the time designation information.
12. A propagation signal for propagating a program to a computer (30) to synchronously display the multimedia contents including a plurality of inter-frame coded moving pictures according to synchronization control description data including a time control description for display of a specific period of each moving picture at a specified time in a specified order, the program directing the computer to perform:
   interpreting (34) synchronization control description data including information specifying a display starting time of the specific period, information indicating an offset time from a head of image data including the specific period to the specific period, and time designation information which specifies a process starting time before a starting point time of the specific period, and indicates that the image data in a period from the process starting time to the starting point time is obtained and played, but is not displayed, and generating playback information;
   obtaining (32) image data from the process starting time to an endpoint time of the specific period according to the playback information, and playing a moving picture; and
   displaying (33) on a screen a moving picture in the specific period of the played moving picture.
13. A multimedia contents editing apparatus (20 and 40) which generates synchronization control description data including a time control description for display of a specific period of each moving picture at a specified time in a specified order so that multimedia contents including a plurality of inter-frame coded moving pictures can be synchronously displayed, comprising:
   a generation device (1 and 22) generating time designation information which specifies a process starting time before a starting point time of the specific period, and indicates that the image data in a period from the process starting time to the starting point time is obtained and played, but is not displayed; and
   an editing device (2 and 26) generating synchronization control description data including information specifying a display starting time of the specific period, information indicating an offset time from a head of image data including the specific period to the specific period, and the time designation information.
14. The multimedia contents editing apparatus according to clause 13, further comprising
   an interface device (21 and 23) obtaining image data of an inter-frame coded moving picture and meta-data including time information of an intra-frame coded frame included in the inter-frame coded moving picture from a moving picture streaming server (10) which holds the plurality of inter-frame coded moving pictures and distributes through streaming an inter-frame coded moving picture at a request, according to moving picture reference information, wherein
   said generation device generates time designation information specifying as the process starting time a time corresponding to an intra-frame coded frame before and closest to a display start frame corresponding to the starting point time, according to the time information of the intra-frame coded frame.
15. The multimedia contents editing apparatus according to clause 13, further comprising:
   a moving picture accumulation device (13) storing the plurality of inter-frame coded moving pictures;
   a streaming interface device (14) distributing through streaming an inter-frame coded moving picture at a request; and
   a meta-data accumulation device (11) storing meta-data including time information of an intra-frame coded frame contained in each moving picture, wherein
   said generation device generates time designation information specifying as the process starting time a time corresponding to an intra-frame coded frame before and closest to a display start frame corresponding to the starting point time, according to the time information of the intra-frame coded frame.
16. A multimedia contents playback apparatus (30) which synchronously displays multimedia contents including a plurality of inter-frame coded moving pictures based on synchronization control description data including a time control description for display of a specific period of each moving picture at a specified time in a specified order, comprising:
   a synchronous control description data playback device (34) interpreting synchronization control description data including information specifying a display starting time of the specific period, information indicating an offset time from a head of image data including the specific period to the specific period, and time designation information which specifies a process starting time before a starting point time of the specific period, and indicates that the image data in a period from the process starting time to the starting point time is obtained and played, but is not displayed, and generating playback information;
   a medium playback device (32) obtaining image data from the process starting time to an endpoint time of the specific period according to the playback information, and playing a moving picture; and
   a display device (33) displaying on a screen a moving picture in the specific period of the played moving picture.
17. The multimedia contents playback apparatus according to clause 16, wherein
   said media playback device notifies a moving picture streaming server which holds the plurality of inter-frame coded moving pictures and distributes through streaming an inter-frame coded moving picture at a request, of information of the process starting time and moving picture reference information before the display starting time, thereby obtaining image data in and after an intra-frame coded frame before and closest to a display start frame corresponding to the starting point time, plays a moving picture from the obtained image data, does not transfer the played moving picture to the display device when the played moving picture corresponds to a frame before the display start frame, but transfers the played moving picture to the display device when the played moving picture corresponds to the display start frame and a current time reaches the display starting time.
18. A multimedia contents editing method of generating synchronization control description data including a time control description for display of a specific period of each moving picture at a specified time in a specified order so that multimedia contents including a plurality of inter-frame coded moving pictures can be synchronously displayed, comprising:
   generating (1 and 22) time designation information which specifies a process starting time before a starting point time of the specific period, and indicates that the image data in a period from the process starting time to the starting point time is obtained and played, but is not displayed; and
   generating (2 and 26) synchronization control description data including information specifying a display starting time of the specific period, information indicating an offset time from a head of image data including the specific period to the specific period, and the time designation information.
19. A computer-readable storage medium (52, 55, 59 and 61) storing synchronization control description data which is interpreted by a computer synchronously displaying multimedia contents including a plurality of inter-frame coded moving pictures and includes a time control description for display of a specific period of each moving picture at a specified time in a specified order, the time control description comprising:
   information specifying a display starting time of the specific period;
   information indicating an offset time from a head of image data including the specific period to the specific period; and
   time designation information which specifies a process starting time before a starting point time of the specific period, and indicates that image data in a period from the process starting time to the starting point time is obtained and played, but is not displayed by the computer.
20. A multimedia contents editing apparatus (20 and 40) which generates synchronization control description data including a time control description for display of a specific period of each moving picture at a specified time in a specified order so that multimedia contents including a plurality of inter-frame coded moving pictures can be synchronously displayed, comprising:
   generation means (1 and 22) for generating time designation information which specifies a process starting time before a starting point time of the specific period, and indicates that the image data in a period from the process starting time to the starting point time is obtained and played, but is not displayed; and
   editing means (2 and 26) for generating synchronization control description data including information specifying a display starting time of the specific period, information indicating an offset time from a head of image data including the specific period to the specific period, and the time designation information.
21. A multimedia contents playback apparatus (30) which synchronously displays multimedia contents including a plurality of inter-frame coded moving pictures according to synchronization control description data including a time control description for display of a specific period of each moving picture at a specified time in a specified order, comprising:
   synchronous control description data playback means (34) for interpreting synchronization control description data including information specifying a display starting time of the specific period, information indicating an offset time from a head of image data including the specific period to the specific period, and time designation information which specifies a process starting time before a starting point time of the specific period, and indicates that the image data in a period from the process starting time to the starting point time is obtained and played, but is not displayed, and generating playback information;
   medium playback means (32) for obtaining image data from the process starting time to an endpoint time of the specific period according to the playback information, and playing a moving picture; and
   display means (33) for displaying on a screen a moving picture in the specific period of the played moving picture.

## Claims

1. A computer-readable storage medium (52, 55, 59 and 61) storing a program for a computer (30) to synchronously display the multimedia contents including a plurality of inter-frame coded moving pictures according to synchronization control description data including a time control description for display of a specific period of each moving picture at a specified time in a specified order, the program directing the computer to perform:
interpreting (34) synchronization control description data including information specifying a display starting time at which the specific period starts to be displayed, information indicating an offset time from a head of image data including the specific period to the starting point time of the specific period, and time designation information which specifies a process starting time before a starting point time of the specific period, and indicates that the image data in a period from the process starting time to the starting point time is obtained and regenerated, but is not displayed, and generating playback information;
obtaining (32) image data from the process starting time to an endpoint time of the specific period according to the playback information, and playing a moving picture; and
displaying (33) on a screen a moving picture in the specific period of the played moving picture.

2. The storage medium according to claim 1, wherein
said time designation information specifies a time corresponding to an intra-frame coded frame before and closest to a display start frame corresponding to the starting point time as the process starting time.

3. A multimedia contents playback apparatus (30) which synchronously displays multimedia contents including a plurality of inter-frame coded moving pictures based on synchronization control description data including a time control description for display of a specific period of each moving picture at a specified time in a specified order, comprising:
a synchronous control description data playback device (34) interpreting synchronization control description data including information specifying a display starting time at which the specific period starts to be displayed, information indicating an offset time from a head of image data including the specific period to the starting point time of the specific period, and time designation information which specifies a process starting time before a starting point time of the specific period, and indicates that the image data in a period from the process starting time to the starting point time is obtained and regenerated, but is not displayed, and generating playback information;
a medium playback device (32) obtaining image data from the process starting time to an endpoint time of the specific period according to the playback information, and playing a moving picture; and
a display device (33) displaying on a screen a moving picture in the specific period of the played moving picture.

4. The multimedia contents playback apparatus according to claim 3, wherein
said media playback device notifies a moving picture streaming server which holds the plurality of inter-frame coded moving pictures and distributes through streaming an inter-frame coded moving picture at a request, of information of the process starting time and moving picture reference information before the display starting time, thereby obtaining image data in and after an intra-frame coded frame before and closest to a display start frame corresponding to the starting point time, plays a moving picture from the obtained image data, does not transfer the played moving picture to the display device when the played moving picture corresponds to a frame before the display start frame, but transfers the played moving picture to the display device when the played moving picture corresponds to the display start frame and a current time reaches the display starting time.

5. A computer-readable storage medium (52, 55, 59 and 61) storing synchronization control description data which is interpreted by a computer synchronously displaying multimedia contents including a plurality of inter-frame coded moving pictures and includes a time control description for display of a specific period of each moving picture at a specified time in a specified order, the time control description comprising:
information specifying a display starting time at which the specific period starts to be displayed;
information indicating an offset time from a head of image data including the specific period to the starting point time of the specific period; and
time designation information which specifies a process starting time before a starting point time of the specific period, and indicates that image data in a period from the process starting time to the starting point time is obtained and played, but is not displayed by the computer.
